(19) **Europäisches Patentamt / European Patent Office / Office européen des brevets**

(11) **EP 3 903 426 B1**

(12) **EUROPEAN PATENT SPECIFICATION**

(45) Date of publication and mention of the grant of the patent:
**25.10.2023   Bulletin 2023/43**

(21) Application number: **19701084.6**

(22) Date of filing: **17.01.2019**

(51) International Patent Classification (IPC):
**H04B 7/06** (2006.01)

(52) Cooperative Patent Classification (CPC):
**H04B 7/061; H04B 7/063; H04B 7/0639; H04B 7/0658**

(86) International application number:
**PCT/EP2019/051161**

(87) International publication number:
**WO 2020/147954 (23.07.2020 Gazette 2020/30)**

(54) **DEVICE AND METHOD FOR REDUCED FEEDBACK CHANNEL SOUNDING FOR NEXT GENERATION WIFI**

VORRICHTUNG UND VERFAHREN FÜR REDUZIERTES RÜCKKOPPLUNGSKANAL-SOUNDING FÜR WIFI DER NÄCHSTEN GENERATION

DISPOSITIF ET PROCÉDÉ DE SONDAGE DE CANAL À RÉTROACTION RÉDUITE POUR WIFI DE PROCHAINE GÉNÉRATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.11.2021   Bulletin 2021/44**

(73) Proprietor: **Huawei Technologies Co., Ltd.**
**Longgang District,**
**Shenzhen, Guangdong 518129 (CN)**

(72) Inventors:
- **SHILO, Shimon**
  **80992 Munich (DE)**
- **EZRI, Doron**
  **80992 Munich (DE)**
- **EPSTEIN, Leonid**
  **80992 Munich (DE)**
- **HENCINSKI, Oren**
  **80992 Munich (DE)**
- **BEN-ARIE, Yaron**
  **80992 Munich (DE)**
- **TSODIK, Genadiy**
  **80992 Munich (DE)**

(74) Representative: **Roth, Sebastian**
**Mitscherlich PartmbB**
**Patent- und Rechtsanwälte**
**Karlstraße 7**
**80333 München (DE)**

(56) References cited:
**KR-A- 20160 031 443     US-A1- 2017 111 924**

**Description**

TECHNICAL FIELD

The present invention relates to a channel sounding procedure, and in particular, to a reduced feedback channel sounding procedure for next generation WiFi. The invention provides a transmitting device and a receiving device, both for supporting reduced feedback in a channel sounding procedure.

BACKGROUND

Beamforming is a method, in which a beamformer (Tx side) precodes transmitted data with a precoder matrix based on channel knowledge between the beamformer and a beamformee (Rx side). The beamformer may be an access point (AP) and the beamformee may be a station (STA). A channel sounding procedure is a method for the AP to collect the information from one or more STAs regarding the wireless channel between AP and STAs.

This procedure includes three main stages:

- The AP initializes a feedback obtaining procedure by sending a Non-Data-Packet-Announcement (NDPA).

- The AP sends a training frame, i.e. Non-Data-Packet (NDP), for channel estimation and feedback computation.

- The STA sends feedback data to the AP.

While the first two stages are short, the feedback data can be large and may require a long packet to be transmitted. The feedback data contains a precoder for a group of tones, where the size of each group is Ng. Ng is a positive number defined typically by the standard. Ng may be specified by the AP per feedback transmission. An average SNR may be specified for each space-time stream, and optionally - in multi-user type feedback - the SNR per tone may be specified.

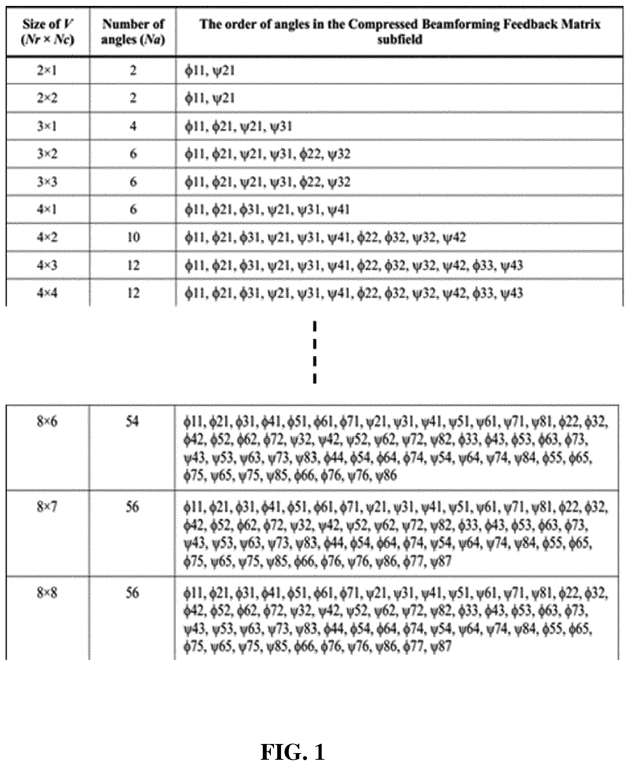

Current standard versions define multiple input multiple output (MIMO) schemes up to $8 \times 8$, which lead to a very large size feedback. Assuming that an average size of each angle transmitted in compressed format is 1 byte (B), the overall feedback size required for 80 MHz using Ng = 4 will be around 14 KB. However, assuming that a major part of the STAs supports up to 2 spatial streams, the practical feedback size would be around 6.5 KB, which is less than the single media access control protocol data unit (MPDU) size allowed for the feedback transmission. This means that 8 stations can transmit feedback simultaneously within a single multi-user (MU) frame (assuming that a modulation and coding scheme (MCS) index is 4 and Nss = 2), as shown in FIG. 1.

A number of key candidate features are introduced in next generation WiFi. Two key candidate features are wider bandwidth (up to 320 MHz) and higher order MIMO (up to 16 streams). Although those features provide significant improvement in peak throughput, they also introduce new challenges that need to be addressed.

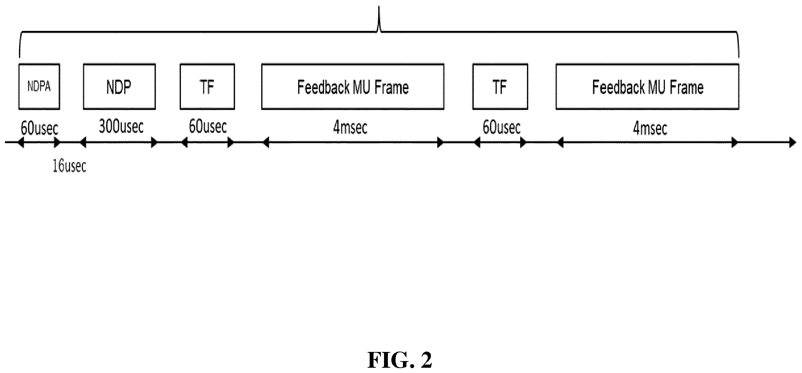

Increasing the number of antennas to 16 means 58 angles per tone are needed for a feedback of 2 streams. Assuming BW of 320 MHz and 2 spatial streams, the feedback size is around 58 KB. This means that only 4 stations can transmit a feedback within a single physical protocol data unit (PPDU) frame (assuming low MCS). Assuming 8 stations (or more) need to be supported, the overall process to collect a feedback from all the stations would require at least 8.5 msec as shown in FIG. 2.

Very large feedback leads to several issues that can limit system efficiency and reduce the overall benefit of the larger BW and MIMO schemes:

- In general, the longer the feedback, the less efficient the system is (feedback takes up resources instead of data).

- Longer feedback requires more PPDUs to complete transmission for all the stations thus more overhead (for instance, legacy part, trigger frames, SIFS).

- Long feedback reduces the number of maximum stations that can transmit feedback data in parallel, thus can lead to an extremely high overhead.

- Maximum number of supported stations is limited.

- MU-MIMO or very large MIMO schemes may require more frequent feedback updates, which can lead to an extremely high overhead.

Thus, a size of the feedback data may be a bottleneck of the next generation MIMO schemes and alternative solutions need to be suggested.

US 2017/111924 A1 discloses an AP including a controller and a transceiver, the controller configured to generate a NDPA including information indicating STAs to transmit a feedback report, a NDP containing pilots to compute the feedback report, and a trigger frame (TF) to trigger transmission of the feedback report from at least one of the STAs, and the transceiver is operably connected to the controller and configured to transmit a channel sounding sequence that includes the NDPA, the NDP, and the TF. KR 2016 0031443 A1 relates to a pre-5G or 5G communication system to be provided for supporting higher data rates after a 4G communication system such as LTE. It provides a device for channel information feedback from a first device to a second device in a wireless communication system such as a WLAN and a method thereof.

SUMMARY

Feedback size is related to the size of the channel matrix, the number of streams to be reported, and the number of tones that will be used for computing the feedback in frequency domain. Thus, when those values get larger, the size of the feedback becomes larger as well. Hence, a compressed beamforming feedback is desired to support these new features from the next generation WiFi, in particular, wider BW and higher number of streams.

In view of the above-mentioned problems and disadvantages, the present invention aims to reduce the feedback in a channel sounding procedure. An objective is in particular to compute the feedback for a smaller channel matrix, less tones and less number of streams or a combination of those.

The objective is achieved by the embodiment provided in the enclosed independent claims. Advantageous implementations of the embodiments of the present invention are further defined in the dependent claims. The solution can be achieved if a STA is allowed to use a near-optimal solution or an optimal solution with a slightly higher complexity, in order to reduce the size of the transmitted feedback.

Solutions provided according to embodiments of the present invention comprise:

- Antenna Selection - instead of using all the Tx antennas (e.g. all 16 Tx antennas) for feedback calculation, a STA can select a subset of antennas (e.g. the strongest antennas) to use for transmission and provide a feedback based on the subset.

- Wideband precoder - a time-domain single precoding vector (for all tones) for each space-time stream is used, which is calculated based on the channel measured over the multiple tones with reasonable performance degradation.

- A combination of wideband & narrowband precoders - the narrowband precoder can be divided into two components, where the first component is a wideband precoder and the second component is a narrowband precoder which depends on a smaller, equivalent channel matrix. The calculation of the narrowband precoding vector based on wideband precoder may require an additional complexity.

The invention is defined by the appended set of claims.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

BRIEF DESCRIPTION OF DRAWINGS

The above described aspects and implementation forms of the present invention will be explained in the following description of specific embodiments in relation to the enclosed drawings, in which

FIG. 1     shows an example of feedback sizes in previous standards.

FIG. 2     shows an example of expected feedback duration in next generation WiFi.

FIG. 3       shows a transmitting device according to an embodiment of the invention.

FIG. 4       shows an example of a reduced feedback indication according to an embodiment of the present invention.

FIG. 5       shows an example of an antenna selection feedback format according to an embodiment of the present invention.

FIG. 6       shows an example of a wideband precoder feedback format according to an embodiment of the present invention.

FIG. 7       shows an example of a per-tone precoder based on wideband precoder feedback Format according to an embodiment of the present invention.

FIG. 8       shows a receiving device according to an embodiment of the invention.

FIG. 9       shows a schematic block flowchart of a method for supporting feedback in channel sounding procedure according to an embodiment of the present invention.

FIG. 10      shows a schematic block flowchart of another method for supporting feedback in channel sounding procedure according to an embodiment of the present invention.

FIG. 11      shows an example of single stream simulation results according to an embodiment of the present invention.

FIG. 12      shows another example of single stream simulation results according to an embodiment of the present invention.

DETAILED DESCRIPTION OF EMBODIMENTS

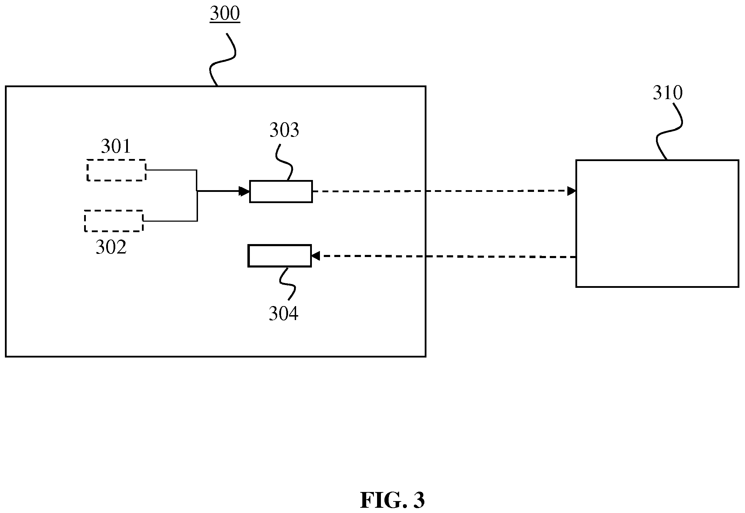

FIG. 3 shows a transmitting device 300 according to an embodiment of the invention. The transmitting device 300 is configured to select at least one of a plurality of feedback types 301. Further, it is configured to determine, and send to a receiving device 310, a feedback indication format 303, wherein the feedback indication format 303 comprises the selected at least one feedback type 301 and a feedback dependent field 302 based on the selected feedback type 301. The transmitting device 300 is also configured to obtain feedback data 304 from the receiving device 310, wherein the feedback data 304 bases on the determined feedback indication format 303 sent to the receiving device 310.

The transmitting device 300 may be an AP, and the receiving device 310 may be a STA. In case the overhead of feedback size is expected to be too high, the AP may allow and suggest the STA to use one of the proposed methods to provide a reduced feedback. The STA will adjust the details of the feedback to the desired performance and indicate the AP which format exactly was applied and what are the details of the provided feedback. The transmission of the feedback will include thus the format description as well as feedback data itself.

AP and STA may exchange capability information, in particular, the STA informs the AP regarding the possible formats and schemes it can support. The AP may trigger a STA for feedback obtaining procedure and indicate which format of reduced feedback is preferred. Following the indication, the STA may compute the feedback data based on channel conditions and AP preferences. The STA may further send the feedback data including indication of chosen format.

It should be noted that some steps mentioned above may be permanently agreed between the AP and STA or may be chosen each time when feedback obtaining procedure is performed.

Optionally, the transmitting device 300 may further configured to receive an indication about which feedback type is supported by the receiving device 310. Then, it may select at least one of the plurality of feedback types 301 based on the indication sent by the receiving device 310.

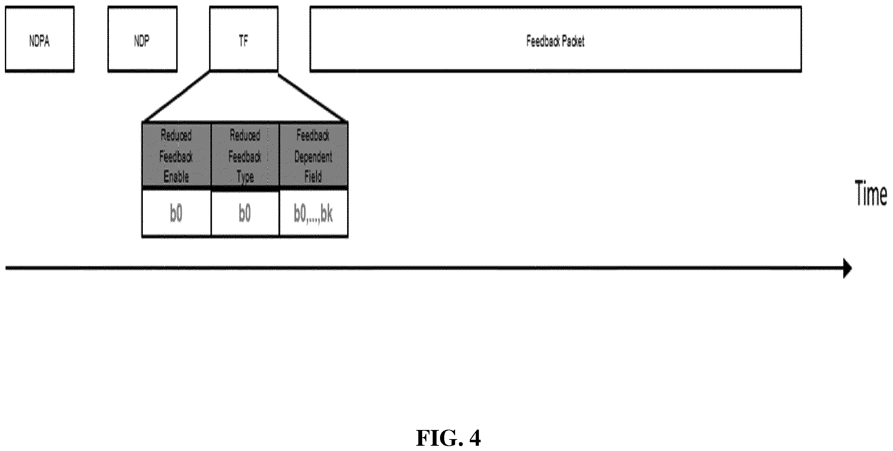

Protocols based on NDPA & NDP may be adopted with additional information to be transmitted. The AP may add information to indicate to each STA on the preferred reduced feedback type and provide the details regarding the format as shown in FIG. 4:

• Reduced Feedback Enable - Single bit that indicates if a STA is allowed to transmit reduced feedback or not.

• Reduced Feedback Type - Single bit that indicates which type of reduced feedback to be applied (e.g. '0' for antenna selection, '1' for wideband precoder).

• Feedback Dependent Field - provides a detail according to reduced feedback type indicated in previous field.

Alternatively, if the AP did not specify the preferred format of reduced feedback, the STA may select any feedback format according to channel conditions and STAs capabilities. The indication of non-specified reduced feedback format may be done by setting all the bits of Feedback Dependent Field (presented on FIG. 4) to zero.

In order to reduce the size of the transmitted feedback, three feedback types may be provided. The feedback type comprises an antenna selection feedback type, and/or a wideband precoder feedback type, and/or a combination of wideband precoder and narrowband precoder feedback type.

If the feedback type is the antenna selection feedback type, a first field of the feedback dependent field 302 indicates a number of antennas to be selected by the receiving device 310 in a set of antennas of the transmitting device 300, a second field of the feedback dependent field 302 comprises a set of factors, each factor indicating a number of tones for a different subset of antennas in the set of antennas.

The main idea is to allow a STA to choose a subset of antennas and to calculate a precoding vector based on this subset. For example, a subset of the strongest antennas may be selected by the STA. The precoding vector may be calculated using existing computation method.

This can be applied in two main cases: The AP decides to reduce overhead of feedback transmission; or the STA does not support feedback calculation for 16 streams (SVD or other method is limited to lower number of streams).

The STA may transmit the feedback and may also indicate, e.g. by a bitmap of 16bits, which antennas were selected. For example, feedback for 2 streams with 8 antennas will require around 28 KB, which is less than half of the feedback for the full set of antennas (28 angles + 2 bytes for selected antenna indication per tone). Moreover, in this case the AP can schedule more STAs within a single feedback frame, which can significantly reduce time overhead of feedback transmission.

Depending on channel conditions, different antenna selection per group of tones, or the same set of antennas for group of tones can be applied. The decision may be done by the STA, however the AP is allowed to indicate main guidelines:

• Maximum number of tones for each antenna subset by specifying the factor to be applied on the original Ng value (Full BW means the STA can selected any factor) - see Table 1.

Table 1: Optional Granularity for Antenna Selection Feedback

| Ng | Factor (N) | | | | | | | |
|----|-----|-----|-----|-----|------|------|------|---------|
|  | $\times 1$ | $\times 2$ | $\times 4$ | $\times 8$ | $\times 16$ | $\times 32$ | $\times 64$ | Full BW |
| 4 | $\times 1$ | $\times 2$ | $\times 4$ | $\times 8$ | $\times 16$ | $\times 32$ | $\times 64$ | Full BW |
| 16 | $\times 1$ | $\times 2$ | $\times 4$ | $\times 8$ | $\times 16$ | --- | --- | Full BW |

• Number of antennas to select - assuming the AP transmits with Ntx (e.g. up to 16) antennas it should indicate the number of antennas to be selected N_sel - see Table 2. There may be no selection for a number of Ntx which is less than 8.

Table 2: Number of Antennas for Antenna Selection Feedback

| Ntx | N_sel | | |
|-----|-----|-----|-----|
| 16 | 12 | 8 | 4 |
| 8 | 6 | 4 | --- |

Following the above, the Feedback Dependent Field for antenna selection may be as depicted below in Table 3.

Table 3: Antenna Selection Indication Field

| Ng Factor | N_sel |
|-----------|-------|
| b0, ..., b2 | b0, b1 |

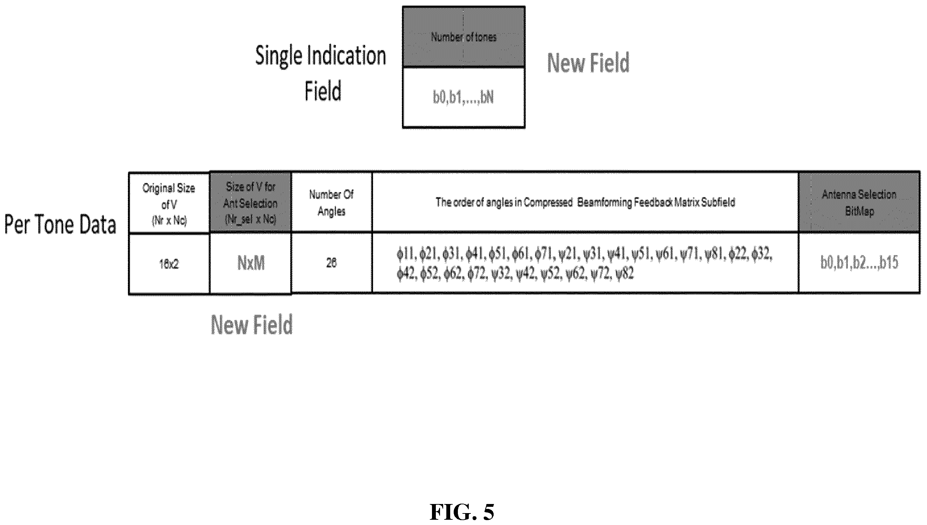

Following the indication provided by the AP, each STA may transmit the following information: actual number of tones selected - N bits, indicating a number from 1 to maximum number of tones; selected Antennas - bitmap (size depends on Ntx); and compressed feedback data for reduced channel matrix (the calculation of feedback data reuses the existing methods and thus not a part of the invention). FIG. 5 shows an example of the format for feedback transmission for channel matrix of size $16 \times 2$.

Therefore, the transmitting device 300 may further be configured to receive an indication of a factor selected by the receiving device 310. Further, it may be configured to receive a bitmap indicating a subset of antennas selected by the receiving device 310.

If the feedback type is the wideband precoder feedback format, a first field of the feedback dependent field 302 indicates a maximum allowed number of tones for each of a plurality of determined wideband precoder calculations; a second field of the feedback dependent field 302 indicates that a per-tone precoder data is not required.

Instead of per-tone feedback, it is possible to feedback wideband (time domain) precoding for multiple tones. Wideband precoding may be viewed as a directional antenna - same for all tones. Denoting $H_k$ as the channel matrix corresponding to the k-th tone, we compute the sum of the covariance across all tones and then compute the eigenvector(s) corresponding to this sum:

$$\mathrm{W} = eig\left(\sum_{k=1}^{N_k} \mathrm{H}_k^* \mathrm{H}_k\right)$$

The number of tones can be any number from 1 to maximum number of tones (depends on supported bandwidth). The entire bandwidth will be divided to a plurality of groups of tones. A single precoder will be calculated for each group. If maximum number of tones is selected, a single precoding vector will be computed for the entire bandwidth. For the regular narrowband (per-tone) precoding, $\mathrm{H}_k^* \mathrm{H}_k$ is computed for every $N_g$ tones (either once for each group of tones or for each tone and averaged), hence the wideband precoding re-uses existing computation methods.

There are two major benefits associated with such a wideband precoder: extremely short feedback (single precoder for multiple tones); more resilient to movements/changes in channel - a wideband precoder is like a directional antenna, so if we assume (for explanation sake) a ~30deg antenna, it is far more resilient - even when moving a few meters, one is still within the main lobe.

In case a maximum number of tones is selected, an extremely low amount of data (~12 bytes for $4 \times 4$ or 240 bytes for $16 \times 16$) is transmitted, which means that a very large number of clients is allowed to transmit simultaneously.

Similar to the case of antenna selection, AP would provide a guidelines and allow STA to decide regarding the maximum allowed number of tones for each wideband precoder calculation. AP defines allowed factor ($\times 8$ means that actual Ng = $8 \times$Ng). And the STA indicates which factor is used in current feedback transmission and all the precoders.

The feedback dependent field thus will be similar to antenna selection as shown on Table 1. The AP may further allowed to indicate if the per-tone precoder is required or not. Thus the feedback dependent field for wideband precoder will be of the form depicted on Table 4.

Table 4: Wideband Precoder Indication Data

| Ng Factor | Per-tone Flag |
|-----------|---------------|
| b0, ..., b2 | b0 |

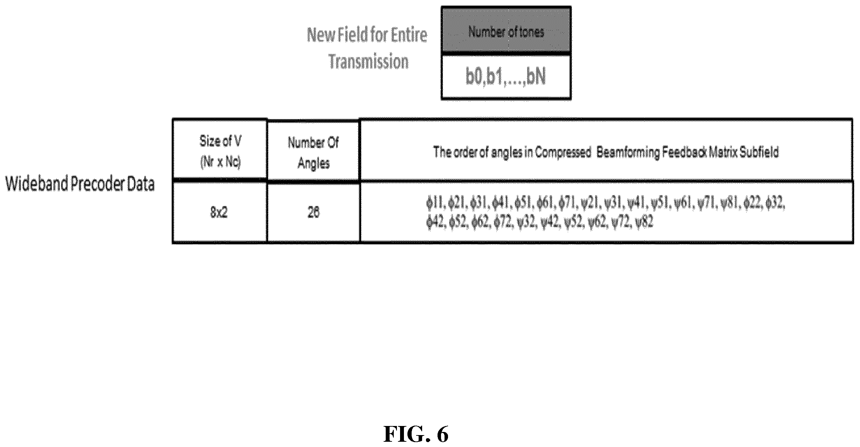

The STA may indicate, which number of tones is selected for precoder calculation and also provide a precoder data of wideband precoder. The wideband feedback format is shown as FIG. 6.

Therefore, the transmitting device 300 may further configured to receive an indication from the receiving device 310 about which number of tones is selected for a wideband precoder calculation; and receive precoder data associated with a wideband precoder calculation from the receiving device 310.

If the feedback type is a combination of wideband precoder and narrowband precoder feedback type, a first field of the feedback dependent field 302 indicates a maximum allowed number of tones for each of a plurality of determined wideband precoder calculations; a second field of the feedback dependent field 302 indicates that a per-tone precoder data is required.

In order to reduce the amount of feedback, the narrowband precoder can be constructed in two steps: first, computing the wideband precoder; second, based on the equivalent channel matrix after application of the wideband precoder, computing the narrowband precoder, per-tone, on the smaller equivalent matrix. The details are described herein.

Assuming that the wideband precoder is applied by the transmitter, the equivalent channel matrix would be given by $\hat{H}_k = H_k W$. Assuming the number of Tx and Rx antennas is $N_{TX}$ and $N_{RX}$ respectively, the size of the original channel matrix is $N_{RX} \times N_{TX}$ and the size of wideband precoder is $N_{TX} \times N_{TX}$. However if the number of spatial streams $N_{STS}$ requested for feedback transmission is lower than $N_{TX}$, only a submatrix of wideband precoder will be used $\tilde{W}$ (while only the first $N_{STS}$ columns are used). In this case the equivalent channel matrix $\hat{H}_k$ will be of size $N_{RX} \times N_{STS}$ which is (sometimes significantly) smaller than the original estimated channel matrix. So the following scheme for the feedback is suggested when number of streams is lower than number of transmit antennas: calculate wideband precoder; calculate the equivalent channel and a per-tone precoder based on it; and feedback both wideband precoder and per-tone precoder.

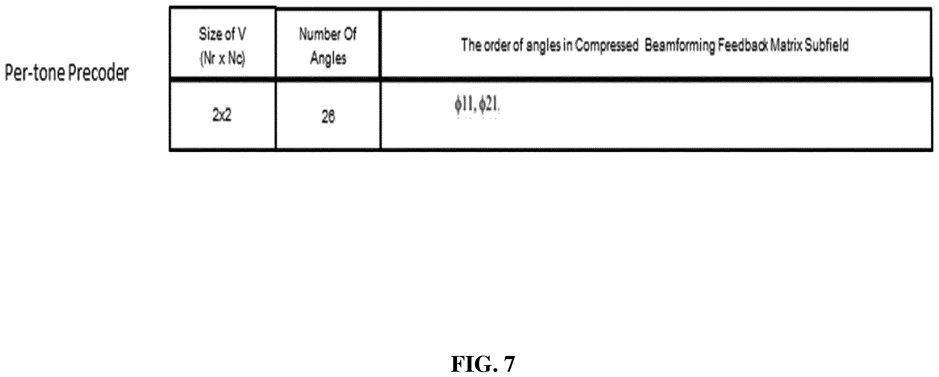

If the STA transmits a per-tone precoder based on wideband precoder, the information of per-tone precoder as shown on FIG. 7 should be added to feedback transmission per each precoder.

Therefore, the transmitting device 300 may further configured to receive an indication from the receiving device 310 about which number of tones is selected for a wideband precoder calculation; receive precoder data associated with a wideband precoder calculation from the receiving device 310 and receive the per-tone precoder data from the receiving device 310. Optionally, the precoder data associated with a wideband precoder calculation may include a full information regarding the wideband precoder; or only angle information of the wideband precoder.

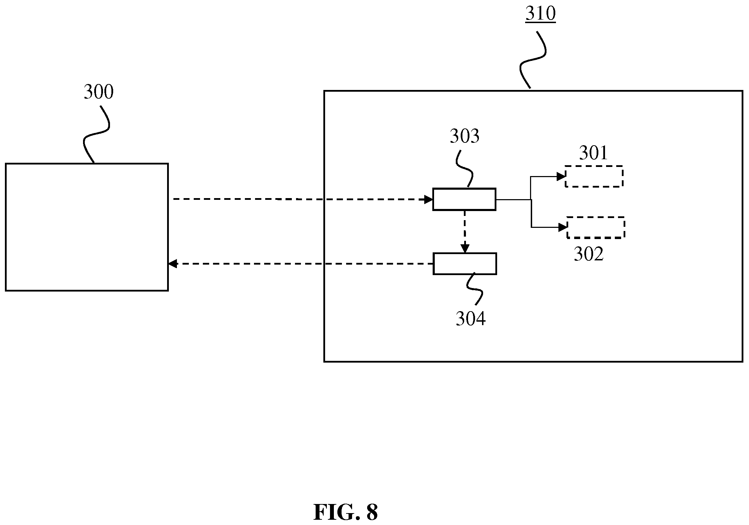

FIG. 8 shows a receiving device 310 according to an embodiment of the invention. The receiving device 310 is configured to support reduced feedback in a channel sounding procedure. The receiving device 310 of FIG. 8 may particularly be the receiving device 310 of FIG. 3. The transmitting device 300 shown in FIG. 8 may be the one shown in FIG. 3. The receiving device 310 may be a receiver or may be included in a receiver.

The receiving device 310 is configured to operate inversely to the transmitting device 300 of FIG. 3. In particular, the receiving device 310 is configured to: receive a feedback indication format 303 from a transmitting device 300, wherein the feedback indication format 303 comprises at least one feedback type 301 and a feedback dependent field 302; determine feedback data 304 based on the feedback indication format 303; and transmit the feedback data 304 to the transmitting device 300.

The receiving device 310 may be a STA, and the transmitting device 300 may be an AP. In case the overhead of feedback size is expected to be too high, AP may allow and suggest STA to use one of the proposed methods to provide a reduced feedback. STA will adjust the details of the feedback to the desired performance and indicate AP which format exactly was applied and what are the details of the provided feedback.

Optionally, the receiving device 310 may configured to transmit an indication about which feedback type is supported in the receiving device 310, to the transmitting device 300.

Three feedback types are provided in order to reduce the size of the transmitted feedback. The feedback type comprises an antenna selection feedback type, and/or a wideband precoder feedback type, and/or a combination of wideband precoder and narrowband precoder feedback type.

Based on different feedback types, the feedback dependent field carries different detailed information to indicate the receiving device 310 to proceed accordingly. Details are similar as described in the previous embodiments of the present invention regarding the transmitting device 300.

If the feedback type is the antenna selection feedback type, a first field of the feedback dependent field 302 indicates a number of antennas to be selected by the receiving device 310 in a set of antennas of the transmitting device 300, a second field of the feedback dependent field 302 comprises a set of factors, each factor indicating a number of tones for a different subset of antennas in the set of antennas.

The receiving device 310 may be configured to: select a subset of antennas based on the number of antennas indicated by the first field of the feedback dependent field, and select the factor from the set of factors indicated by the second field of the feedback dependent field 302 associated with the determined subset; calculate a precoding vector based on the selected factor and subset of antennas; transmit an indication about the selected factor to the transmitting device 300; and transmit a bitmap indicating the selected subset of antennas to the transmitting device 300.

If the feedback type is the wideband precoder feedback format, a first field of the feedback dependent field 302 indicates a maximum allowed number of tones for each of a plurality of determined wideband precoder calculations; a second field of the feedback dependent field 302 indicates that a per-tone precoder data is not required.

The receiving device 310 may be configured to: determine a wideband precoder calculation; select a number of tones allowed for the determined wideband precoder calculation; transmit an indication about which number of tones is selected for the wideband precoder calculation to the transmitting device 300; and transmit precoder data of the wideband precoder calculation to the transmitting device 300.

The receiving device 310 may be further configured to select a first number of bits used to transmit the precoder data, wherein the first number is selected from a set of predefined numbers; and indicate the transmitting device 300 the selected first number.

The receiving device 310 may decide how many number of bits to use for each data entry of wideband precoder and indicate the transmitting device 300 the selected number of bits. This number may be selected from a set of predefined numbers.

If the feedback type is a combination of wideband precoder and narrowband precoder feedback type, a first field of the feedback dependent field 302 indicates a maximum allowed number of tones for each of a plurality of determined wideband precoder calculations; a second field of the feedback dependent field 302 indicates that a per-tone precoder data is required.

The receiving device 310 may be configured to: determine a wideband precoder calculation; select a number of tones allowed for the determined wideband precoder calculation; calculate per-tone precoder data based on the determined wideband precoder calculation; transmit an indication about which number of tones is selected for the wideband precoder calculation to the transmitting device 300; transmit precoder data of the wideband precoder calculation to the transmitting device 300; and transmit the calculated per-tone precoder data to the transmitting device 300.

The receiving device 310 may be further configured to select a second number of bits used to transmit the precoder data, wherein the second number is selected from a set of predefined numbers; and indicate the transmitting device 300 the selected second number.

The receiving device may select different numbers of bits to use for transmitting the wideband precoder and the per-tone precoder.

The receiving device 310 may be further configured to calculate the wideband precoder based on a channel matrix defined by an antenna number of antennas in the transmitting device, and calculate the per-tone precoder data based on a submatrix of the channel matrix, wherein the submatrix is defined by a number received from the transmitting device 300, the received number being equal to or smaller than the antenna number.

The size of the per-tone precoder matrix can be vary. The receiving device may select a subset of antennas from all Tx antennas in the transmitting device. For instance, instead of using all the Tx antennas (e.g. all 16 Tx antennas) for per-tone precoder calculation, the receiving device may only use a subset of Tx antennas (e.g. a number smaller than 16) to calculate per-tone precoder data. And the transmitting device may indicate the receiving device regarding how to select the subset of Tx antennas.

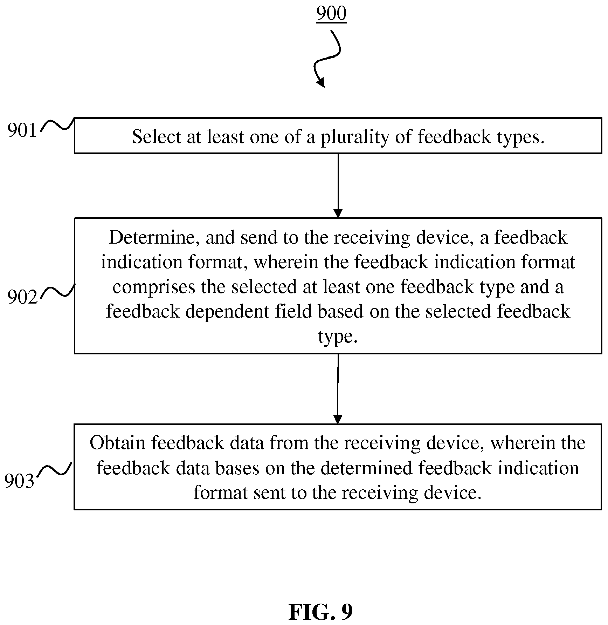

FIG. 9 shows a method 900 for supporting feedback in channel sounding procedure according to an embodiment of the present invention. In particular, the method 900 is performed by a transmitting device. The method comprising: a step 901 of selecting at least one of a plurality of feedback types; a step 902 of determining, and sending to the receiving device, a feedback indication format, wherein the feedback indication format comprises the selected at least one feedback type and a feedback dependent field based on the selected feedback type; and a step 903 of obtaining feedback data from the receiving device, wherein the feedback data bases on the determined feedback indication format sent to the receiving device.

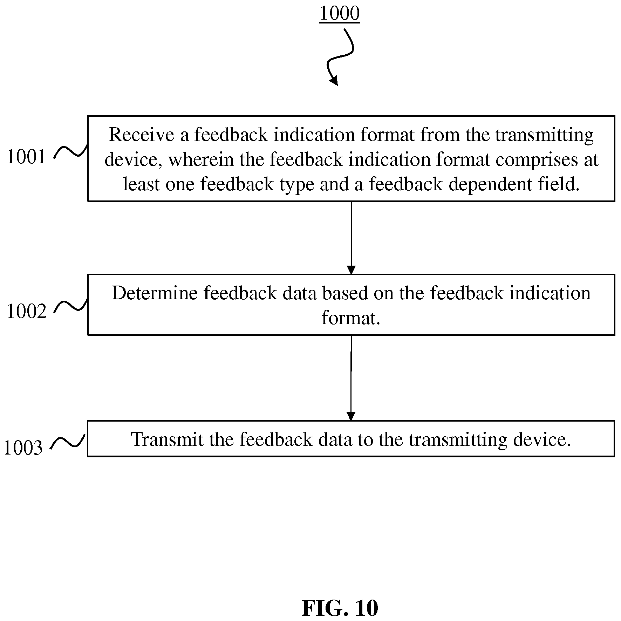

FIG. 10 shows a method 1000 for supporting feedback in channel sounding procedure according to an embodiment of the present invention. In particular, the method 1000 is performed by a receiving device. The method 1000 comprises: a step 1001 of receiving a feedback indication format from the transmitting device, wherein the feedback indication format comprises at least one feedback type and a feedback dependent field; a step 1002 of determining feedback data based on the feedback indication format; and a step 1003 of transmitting the feedback data to the transmitting device.

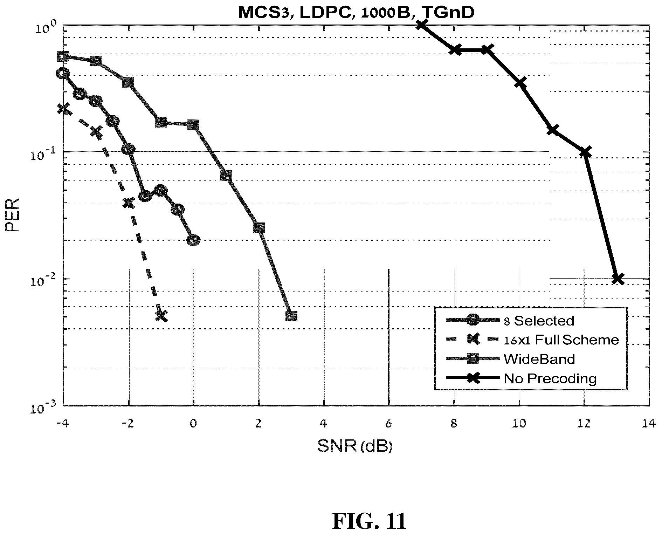

In order to understand the impact of the proposed reduced feedback on the performance we run a simulation with different MCS and Nss with TGnD channel model. FIG. 11 shows a result of single stream performance with four different schemes. It can be seen that antenna selection degrades PER by <1dB and wideband precoder provides a performance degradation of around 3dB, while both schemes significantly outperform the case where no precoding is applied. Thus AP can consider both schemes for reduced feedback with reasonable performance degradation (can be negligible for high MCS where 1dB does not lead to MCS change).

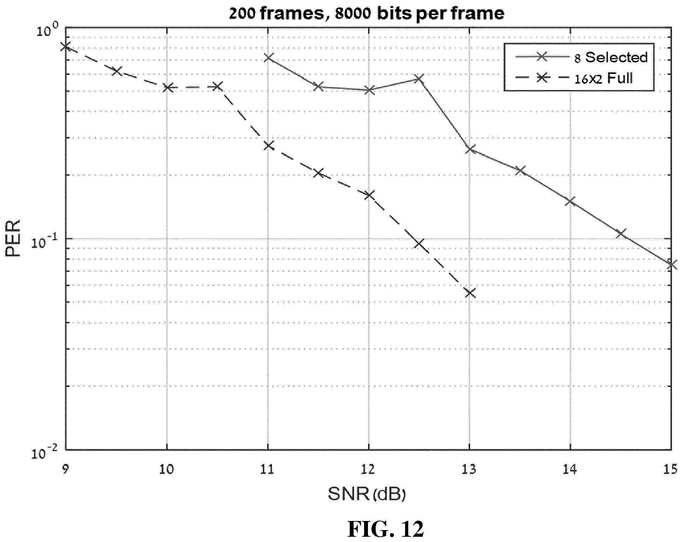

The antenna selection method with 2 streams is also simulated. The results are shown on FIG. 12. It should be noted that even in case of two streams, the degradation in a performance is still reasonable.

In summary, embodiments of the present invention achieve multiple benefits. Advantages are summarized as:

1. Reducing the feedback size by near-optimal schemes can be promising method for reducing the overhead of feedback transmission.

2. Additional implementation complexity required to support the antenna selection and wideband precoder is very low or negligible.

3. Per-tone precoder based on wideband precoder reuse the implemented block and thus does not require new hardware design, and just increase the computational delay.

4. Proposed new formats can be used for a significant reduction in the overhead with reasonable degradation of performance or no degradation in case of per-tone precoder.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

**Claims**

1. Transmitting device (300) for supporting reduced feedback in a channel sounding procedure, the transmitting device (300) being configured to:

    select at least one of a plurality of feedback types (301), wherein each feedback type (301) is used for indicating a receiving device (310) to provide feedback with a reduced size, and the feedback type (301) comprises an antenna selection feedback type, and/or a wideband precoder feedback type, and/or a combination of wideband precoder and narrowband precoder feedback type;
    determine a feedback indication format (303), wherein the feedback indication format (303) comprises the selected at least one feedback type (301) and a feedback dependent field (302) based on the selected feedback type (301);
    provide the feedback indication format (303) to the receiving device (310); and
    obtain feedback data (304) from the receiving device (310), wherein the feedback data (304) bases on the determined feedback indication format (303) sent to the receiving device (310);
    wherein, if the feedback type (301) is the antenna selection feedback type,
    a first field of the feedback dependent field (302) indicates a number of antennas to be selected by the receiving device (310) in a set of antennas of the transmitting device (300); and
    a second field of the feedback dependent field (302) comprises a set of factors, each factor indicating a number of tones for a different subset of antennas in the set of antennas;
    wherein, if the feedback type is the wideband precoder feedback format,
    a first field of the feedback dependent field (302) indicates a maximum allowed number of tones for each of a plurality of determined wideband precoder calculations; and
    a second field of the feedback dependent field (302) indicates that a per-tone precoder data is not required;
    wherein, if the feedback type is a combination of wideband precoder and narrowband precoder feedback type,
    a first field of the feedback dependent field (302) indicates a maximum allowed number of tones for each of a plurality of determined wideband precoder calculations; and
    a second field of the feedback dependent field (302) indicates that a per-tone precoder data is required.

2. Transmitting device (300) according to claim 1, configured to:
    obtain an indication about which feedback type is supported by the receiving device (310); and
    select at least one of the plurality of feedback types (301) based on the indication sent by the receiving device (310).

3. Transmitting device (300) according to claim 1, wherein, if the feedback type (301) is the antenna selection feedback type, the transmitting device (300) is further configured to:
    obtain an indication of a factor selected by the receiving device (310); and obtain a bitmap indicating a subset of antennas selected by the receiving device (310).

4. Transmitting device (300) according to claim 1, wherein, if the feedback type is the wideband precoder feedback format, the transmitting device (300) is further configured to:

    obtain an indication from the receiving device (310) about which number of tones is selected for a wideband precoder calculation; and
    obtain precoder data associated with a wideband precoder calculation from the receiving device (310).

5. Transmitting device (300) according to claim 1, wherein, if the feedback type is a combination of wideband precoder and narrowband precoder feedback type, the transmitting device (300) is further configured to:

    obtain an indication from the receiving device (310) about which number of tones is selected for a wideband precoder calculation;

obtain precoder data associated with a wideband precoder calculation from the receiving device (310); and
obtain the per-tone precoder data from the receiving device (310).

6. Transmitting device (300) according to claim 4 or 5, wherein, the precoder data associated with a wideband precoder calculation includes:

a full information regarding the wideband precoder; or
only angle information of the wideband precoder.

7. Receiving device (310) for supporting reduced feedback in a channel sounding procedure, configured to:

obtain a feedback indication format (303) from a transmitting device (300), wherein the feedback indication format (303) comprises at least one feedback type (301) and a feedback dependent field (302), wherein each feedback type (301) is used for indicating the receiving device (310) to provide feedback with a reduced size, and the feedback type (301) comprises an antenna selection feedback type, and/or a wideband precoder feedback type, and/or a combination of wideband precoder and narrowband precoder feedback type;
determine feedback data (304) based on the feedback indication format (303); and
provide the feedback data (304) to the transmitting device (300);
wherein, if the feedback type (301) is the antenna selection feedback type,
a first field of the feedback dependent field (302) indicates a number of antennas to be selected by the receiving device (310) in a set of antennas of the transmitting device (300); and
a second field of the feedback dependent field (302) comprises a set of factors, each factor indicating a number of tones for a different subset of antennas in the set of antennas;
wherein, if the feedback type is the wideband precoder feedback format,
a first field of the feedback dependent field (302) indicates a maximum allowed number of tones for each of a plurality of determined wideband precoder calculations; and
a second field of the feedback dependent field (302) indicates that a per-tone precoder data is not required;
wherein, if the feedback type is a combination of wideband precoder and narrowband precoder feedback type,
a first field of the feedback dependent field (302) indicates a maximum allowed number of tones for each of a plurality of determined wideband precoder calculations; and
a second field of the feedback dependent field (302) indicates that a per-tone precoder data is required.

8. Receiving device (310) according to claim 7, configured to:
provide an indication about which feedback type is supported in the receiving device (310), to the transmitting device (300).

9. Receiving device (310) according to claim 7, wherein, if the feedback type (301) is the antenna selection feedback type, the receiving device (310) is further configured to:

select a subset of antennas based on the number of antennas indicated by the first field of the feedback dependent field, and select the factor from the set of factors indicated by the second field of the feedback dependent field (302) associated with the determined subset;
calculate a precoding vector based on the selected factor and subset of antennas;
provide an indication about the selected factor to the transmitting device (300); and provide a bitmap indicating the selected subset of antennas to the transmitting device (300).

10. Receiving device (310) according to claim 7, wherein, if the feedback type is the wideband precoder feedback format, the receiving device (310) is further configured to:

determine a wideband precoder calculation;
select a number of tones allowed for the determined wideband precoder calculation;
provide an indication about which number of tones is selected for the wideband precoder calculation to the transmitting device (300); and
provide precoder data of the wideband precoder calculation to the transmitting device (300).

11. Receiving device (310) according to claim 10, configured to:

select a first number of bits used to transmit the precoder data, wherein the first number is selected from a set of predefined numbers; and
indicate the transmitting device (300) the selected first number.

**12.** Receiving device (310) according to claim 7, wherein, if the feedback type is a combination of wideband precoder and narrowband precoder feedback type, the receiving device (310) is further configured to:

determine a wideband precoder calculation;
select a number of tones allowed for the determined wideband precoder calculation;
calculate per-tone precoder data based on the determined wideband precoder calculation;
provide an indication about which number of tones is selected for the wideband precoder calculation to the transmitting device (300);
provide precoder data of the wideband precoder calculation to the transmitting device (300); and
provide the calculated per-tone precoder data to the transmitting device (300).

**13.** Receiving device (310) according to claim 12, configured to:

select a second number of bits used to transmit the precoder data, wherein the second number is selected from a set of predefined numbers; and
indicate the transmitting device (300) the selected second number.

**14.** Receiving device (310) according to claim 12 or 13, configured to:

calculate the wideband precoder based on a channel matrix defined by an antenna number of antennas in the transmitting device, and
calculate the per-tone precoder data based on a submatrix of the channel matrix, wherein the submatrix is defined by a number received from the transmitting device (300), the received number being equal to or smaller than the antenna number.

**Patentansprüche**

**1.** Sendevorrichtung (300) zum Unterstützen einer reduzierten Rückmeldung bei einer "Channel-Sounding"-Prozedur, wobei die Sendevorrichtung (300) für Folgendes konfiguriert ist:

Auswählen mindestens eines einer Vielzahl von Rückmeldungstypen (301), wobei jeder Rückmeldungstyp (301) dazu genutzt wird, um einer Empfangsvorrichtung (310) anzuzeigen, dass sie eine Rückmeldung mit einer reduzierten Größe bereitzustellen hat, und der Rückmeldungstyp (301) einen Antennenauswahl-Rückmeldungstyp und/oder einen Breitbandvorcodierer-Rückmeldungstyp und/oder eine Kombination eines Breitbandvorcodierer- und eines Schmalbandvorcodierer-Rückmeldungstyps umfasst;
Bestimmen eines Rückmeldungsanzeigeformats (303), wobei das Rückmeldungsanzeigeformat (303) den mindestens einen ausgewählten Rückmeldungstyp (301) und ein auf dem ausgewählten Rückmeldungstyp (301) basierendes rückmeldungsabhängiges Feld (302) umfasst;
Bereitstellen des Rückmeldungsanzeigeformats (303) für die Empfangsvorrichtung (310); und
Erhalten von Rückmeldungsdaten (304) von der Empfangsvorrichtung (310), wobei die Rückmeldungsdaten (304) auf dem bestimmten, an die Empfangsvorrichtung (310) gesendeten Rückmeldungsanzeigeformat (303) basieren;
wobei, wenn der Rückmeldungstyp (301) der Antennenauswahl-Rückmeldungstyp ist, ein erstes Feld des rückmeldungsabhängigen Felds (302) eine von der Empfangsvorrichtung (310) auszuwählende Anzahl von Antennen in einer Menge von Antennen der Sendevorrichtung (300) anzeigt; und
ein zweites Feld des rückmeldungsabhängigen Felds (302) eine Menge von Faktoren umfasst, wobei jeder Faktor eine Anzahl von Tönen für eine unterschiedliche Untermenge von Antennen in der Menge von Antennen anzeigt;
wobei, wenn der Rückmeldungstyp das Breitbandvorcodierer-Rückmeldungsformat ist,
ein erstes Feld des rückmeldungsabhängigen Felds (302) eine höchstzulässige Anzahl von Tönen für jede einer Vielzahl bestimmter Breitbandvorcodierer-Berechnungen anzeigt; und
ein zweites Feld des rückmeldungsabhängigen Felds (302) anzeigt, dass keine Pro-Ton-Vorcodiererdaten erforderlich sind;
wobei, wenn der Rückmeldungstyp eine Kombination eines Breitbandvorcodierer- und eines Schmalbandvorcodierer-Rückmeldungstyps ist,
ein erstes Feld des rückmeldungsabhängigen Felds (302) eine höchstzulässige Anzahl von Tönen für jede einer Vielzahl bestimmter Breitbandvorcodierer-Berechnungen anzeigt; und
ein zweites Feld des rückmeldungsabhängigen Felds (302) anzeigt, dass Pro-Ton-Vorcodiererdaten erforderlich sind.

2. Sendevorrichtung (300) nach Anspruch 1, die für Folgendes konfiguriert ist:

Erhalten einer Anzeige dazu, welcher Rückmeldungstyp von der Empfangsvorrichtung (310) unterstützt wird; und
Auswählen mindestens eines der Vielzahl von Rückmeldungstypen (301) basierend auf der Anzeige, die durch die Empfangsvorrichtung (310) gesendet wird.

3. Sendevorrichtung (300) nach Anspruch 1, wobei, wenn der Rückmeldungstyp (301) der Antennenauswahl-Rückmeldungstyp ist, die Sendevorrichtung (300) ferner für Folgendes konfiguriert ist:

Erhalten einer Anzeige eines von der Empfangsvorrichtung (310) ausgewählten Faktors; und
Erhalten einer Bitmap, die eine von der Empfangsvorrichtung (310) ausgewählte Untermenge von Antennen anzeigt.

4. Sendevorrichtung (300) nach Anspruch 1, wobei, wenn der Rückmeldungstyp das Breitbandvorcodierer-Rückmeldungsformat ist, die Sendevorrichtung (300) ferner für Folgendes konfiguriert ist:

Erhalten einer Anzeige von der Empfangsvorrichtung (310) zu der für eine Breitbandvorcodierer-Berechnung ausgewählten Anzahl von Tönen; und
Erhalten von einer Breitbandvorcodierer-Berechnung zugeordneten Vorcodiererdaten von der Empfangsvorrichtung (310).

5. Sendevorrichtung (300) nach Anspruch 1, wobei, wenn der Rückmeldungstyp eine Kombination eines Breitbandvorcodierer- und eines Schmalbandvorcodierer-Rückmeldungstyps ist, die Sendevorrichtung (300) ferner für Folgendes konfiguriert ist:

Erhalten einer Anzeige von der Empfangsvorrichtung (310) zu der für eine Breitbandvorcodierer-Berechnung ausgewählten Anzahl von Tönen;
Erhalten von einer Breitbandvorcodierer-Berechnung zugeordneten Vorcodiererdaten von der Empfangsvorrichtung (310); und
Erhalten der Pro-Ton-Vorcodiererdaten von der Empfangsvorrichtung (310).

6. Sendevorrichtung (300) nach Anspruch 4 oder 5, wobei die einer Breitbandvorcodierer-Berechnung zugeordneten Vorcodiererdaten Folgendes enthalten:

vollständige Informationen bezüglich des Breitbandvorcodierers; oder
nur Winkelinformationen des Breitbandvorcodierers.

7. Empfangsvorrichtung (310) zum Unterstützen einer reduzierten Rückmeldung bei einer "Channel-Sounding"-Prozedur, die für Folgendes konfiguriert ist:

Erhalten eines Rückmeldungsanzeigeformats (303) von einer Sendevorrichtung (300), wobei das Rückmeldungsanzeigeformat (303) mindestens einen Rückmeldungstyp (301) und ein rückmeldungsabhängiges Feld (302) umfasst, wobei jeder Rückmeldungstyp (301) dazu genutzt wird, um der Empfangsvorrichtung (310) anzuzeigen, dass sie eine Rückmeldung mit einer reduzierten Größe bereitzustellen hat, und der Rückmeldungstyp (301) einen Antennenauswahl-Rückmeldungstyp und/oder einen Breitbandvorcodierer-Rückmeldungstyp und/oder eine Kombination eines Breitbandvorcodierer- und eines Schmalbandvorcodierer-Rückmeldungstyps umfasst;
Bestimmen von Rückmeldungsdaten (304) basierend auf dem Rückmeldungsanzeigeformat (303); und
Bereitstellen der Rückmeldungsdaten (304) für die Sendevorrichtung (300);
wobei, wenn der Rückmeldungstyp (301) der Antennenauswahl-Rückmeldungstyp ist, ein erstes Feld des rückmeldungsabhängigen Felds (302) eine von der Empfangsvorrichtung (310) auszuwählende Anzahl von Antennen in einer Menge von Antennen der Sendevorrichtung (300) anzeigt und

ein zweites Feld des rückmeldungsabhängigen Felds (302) eine Menge von Faktoren umfasst, wobei jeder Faktor eine Anzahl von Tönen für eine unterschiedliche Untermenge von Antennen in der Menge von Antennen anzeigt;

wobei, wenn der Rückmeldungstyp das Breitbandvorcodierer-Rückmeldungsformat ist,

ein erstes Feld des rückmeldungsabhängigen Felds (302) eine höchstzulässige Anzahl von Tönen für jede einer Vielzahl bestimmter Breitbandvorcodierer-Berechnungen anzeigt; und

ein zweites Feld des rückmeldungsabhängigen Felds (302) anzeigt, dass keine Pro-Ton-Vorcodiererdaten erforderlich sind;

wobei, wenn der Rückmeldungstyp eine Kombination eines Breitbandvorcodierer- und eines Schmalbandvorcodierer-Rückmeldungstyps ist,

ein erstes Feld des rückmeldungsabhängigen Felds (302) eine höchstzulässige Anzahl von Tönen für jede einer Vielzahl bestimmter Breitbandvorcodierer-Berechnungen anzeigt; und

ein zweites Feld des rückmeldungsabhängigen Felds (302) anzeigt, dass Pro-Ton-Vorcodiererdaten erforderlich sind.

8. Empfangsvorrichtung (310) nach Anspruch 7, die für Folgendes konfiguriert ist:
Bereitstellen einer Anzeige dazu, welcher Rückmeldungstyp in der Empfangsvorrichtung (310) unterstützt wird, für die Sendevorrichtung (300).

9. Empfangsvorrichtung (310) nach Anspruch 7, wobei, wenn der Rückmeldungstyp (301) der Antennenauswahl-Rückmeldungstyp ist, die Empfangsvorrichtung (310) ferner für Folgendes konfiguriert ist:

Auswählen einer Untermenge von Antennen basierend auf der Anzahl von Antennen, die von dem ersten Feld des rückmeldungsabhängigen Felds angezeigt wird, und Auswählen des Faktors aus der Menge von Faktoren, die von dem zweiten Feld des rückmeldungsabhängigen Felds (302), das der bestimmten Untermenge zugeordnet ist, angezeigt wird;

Berechnen eines Vorcodierungsvektors basierend auf dem ausgewählten Faktor und der ausgewählten Untermenge von Antennen;

Bereitstellen einer Anzeige zu dem ausgewählten Faktor für die Sendevorrichtung (300); und

Bereitstellen einer Bitmap, die die ausgewählte Untermenge von Antennen anzeigt, für die Sendevorrichtung (300).

10. Empfangsvorrichtung (310) nach Anspruch 7, wobei, wenn der Rückmeldungstyp das Breitbandvorcodierer-Rückmeldungsformat ist, die Empfangsvorrichtung (310) ferner für Folgendes konfiguriert ist:

Bestimmen einer Breitbandvorcodierer-Berechnung;

Auswählen einer für die bestimmte Breitbandvorcodierer-Berechnung zulässigen Anzahl von Tönen;

Bereitstellen einer Anzeige zu der für die Breitbandvorcodierer-Berechnung ausgewählten Anzahl von Tönen für die Sendevorrichtung (300); und

Bereitstellen von Vorcodiererdaten der Breitbandvorcodierer-Berechnung für die Sendevorrichtung (300).

11. Empfangsvorrichtung (310) nach Anspruch 10, die für Folgendes konfiguriert ist:

Auswählen einer ersten Anzahl von zum Übertragen der Vorcodiererdaten genutzten Bits, wobei die erste Anzahl aus einer Menge vordefinierter Anzahlen ausgewählt wird; und

Anzeigen der ausgewählten ersten Anzahl für die Sendevorrichtung (300).

12. Empfangsvorrichtung (310) nach Anspruch 7, wobei, wenn der Rückmeldungstyp eine Kombination eines Breitbandvorcodierer- und eines Schmalbandvorcodierer-Rückmeldungstyps ist, die Empfangsvorrichtung (310) ferner für Folgendes konfiguriert ist:

Bestimmen einer Breitbandvorcodierer-Berechnung;

Auswählen einer für die bestimmte Breitbandvorcodierer-Berechnung zulässigen Anzahl von Tönen;

Berechnen von Pro-Ton-Vorcodiererdaten basierend auf der bestimmten Breitbandvorcodierer-Berechnung;

Bereitstellen einer Anzeige zu der für die Breitbandvorcodierer-Berechnung ausgewählten Anzahl von Tönen für die Sendevorrichtung (300);

Bereitstellen von Vorcodiererdaten der Breitbandvorcodierer-Berechnung für die Sendevorrichtung (300); und

Bereitstellen der berechneten Pro-Ton-Vorcodiererdaten für die Sendevorrichtung (300).

13. Empfangsvorrichtung (310) nach Anspruch 12, die für Folgendes konfiguriert ist:

Auswählen einer zweiten Anzahl von zum Übertragen der Vorcodiererdaten genutzten Bits, wobei die zweite Anzahl aus einer Menge vordefinierter Anzahlen ausgewählt wird; und
Anzeigen der ausgewählten zweiten Anzahl für die Sendevorrichtung (300).

14. Empfangsvorrichtung (310) nach Anspruch 12 oder 13, die für Folgendes konfiguriert ist:

Berechnen des Breitbandvorcodierers basierend auf einer von einer Antennenanzahl von Antennen in der Sendevorrichtung definierten Kanalmatrix; und
Berechnen der Pro-Ton-Vorcodiererdaten basierend auf einer Untermatrix der Kanalmatrix, wobei die Untermatrix von einer von der Sendevorrichtung (300) empfangenen Anzahl definiert wird, wobei die empfangene Anzahl gleich oder kleiner als die Antennenanzahl ist.

**Revendications**

1. Dispositif de transmission (300) pour supporter une rétroaction réduite dans une procédure de sondage de canal, le dispositif de transmission (300) étant configuré pour :

la sélection d'au moins un type parmi une pluralité de types de rétroaction (301), chaque type de rétroaction (301) étant utilisé pour indiquer à un dispositif de réception (310) de fournir une rétroaction avec une taille réduite, et le type de rétroaction (301) comprend un type de rétroaction de sélection d'antenne, et/ou un type de rétroaction de pré-codeur à large bande, et/ou une combinaison de type de rétroaction de pré-codeur à large bande et de pré-codeur à bande étroite ;
la détermination d'un format (303) d'indication de rétroaction, le format (303) d'indication de rétroaction comprenant l'au moins un type de rétroaction (301) sélectionné et un champ (302) dépendant de la rétroaction basé sur le type de rétroaction (301) sélectionné ;
la fourniture du format (303) d'indication de rétroaction au dispositif de réception (310) ; et
l'obtention de données de rétroaction (304) depuis le dispositif de réception (310), les données de rétroaction (304) étant basées sur le format (303) d'indication de rétroaction déterminé envoyé au dispositif de réception (310) ;
dans lequel, si le type de rétroaction (301) est le type de rétroaction de sélection d'antenne,
un premier champ du champ (302) dépendant de la rétroaction indique un nombre d'antennes à sélectionner par le dispositif de réception (310) dans un ensemble d'antennes du dispositif de transmission (300) ; et
un deuxième champ du champ (302) dépendant de la rétroaction comprend un ensemble de facteurs, chaque facteur indiquant un nombre de tonalités pour un sous-ensemble différent d'antennes dans l'ensemble d'antennes ;
dans lequel, si le type de rétroaction est le format de rétroaction du pré-codeur à large bande,
un premier champ du champ (302) dépendant de la rétroaction indique un nombre maximal autorisé de tonalités pour chaque calcul d'une pluralité de calculs de pré-codeur à large bande déterminés ; et
un deuxième champ du champ (302) dépendant de la rétroaction indique qu'une donnée de pré-codeur par tonalité n'est pas requise ;
dans lequel, si le type de rétroaction est une combinaison de type de rétroaction de pré-codeur à large bande et de pré-codeur à bande étroite,
un premier champ du champ (302) dépendant de la rétroaction indique un nombre maximal autorisé de tonalités pour chaque calcul d'une pluralité de calculs de pré-codeur à large bande déterminés ; et
un deuxième champ du champ (302) dépendant de la rétroaction indique qu'une donnée de pré-codeur par tonalité est requise.

2. Dispositif de transmission (300) selon la revendication 1, configuré pour :

l'obtention d'une indication sur le type de rétroaction qui est pris en charge par le dispositif de réception (310) ; et
la sélection d'au moins un type de rétroaction parmi la pluralité de types de rétroaction (301) sur la base de l'indication envoyée par le dispositif de réception (310).

**3.** Dispositif de transmission (300) selon la revendication 1, dans lequel, si le type de rétroaction (301) est le type de rétroaction de sélection d'antenne, le dispositif de transmission (300) est en outre configuré pour :

l'obtention d'une indication d'un facteur sélectionné par le dispositif de réception (310) ; et
l'obtention d'un bitmap indiquant un sous-ensemble d'antennes sélectionné par le dispositif de réception (310).

**4.** Dispositif de transmission (300) selon la revendication 1, dans lequel, si le type de rétroaction est le format de rétroaction de pré-codeur à large bande, le dispositif de transmission (300) est en outre configuré pour :

l'obtention d'une indication en provenance du dispositif de réception (310) concernant le nombre de tonalités sélectionné pour un calcul de pré-codeur à large bande ; et
l'obtention de données de pré-codeur associées à un calcul de pré-codeur à large bande à partir du dispositif de réception (310).

**5.** Dispositif de transmission (300) selon la revendication 1, dans lequel, si le type de rétroaction est une combinaison de type de rétroaction de pré-codeur à large bande et de pré-codeur à bande étroite, le dispositif de transmission (300) est en outre configuré pour :

l'obtention d'une indication en provenance du dispositif de réception (310) concernant le nombre de tonalités sélectionné pour un calcul de pré-codeur à large bande ;
l'obtention de données de pré-codeur associées à un calcul de pré-codeur à large bande en provenance du dispositif de réception (310) ; et
l'obtention des données de pré-codeur par tonalité en provenance du dispositif de réception (310).

**6.** Dispositif de transmission (300) selon la revendication 4 ou 5, dans lequel les données de pré-codeur associées à un calcul de pré-codeur à large bande comprennent :

une information complète concernant le pré-codeur à large bande, ou
uniquement des informations d'angle du pré-codeur à large bande.

**7.** Dispositif de réception (310) pour supporter une rétroaction réduite dans une procédure de sondage de canal, configuré pour :

l'obtention d'un format (303) d'indication de rétroaction à partir d'un dispositif de transmission (300), le format (303) d'indication de rétroaction comprenant au moins un type de rétroaction (301) et un champ (302) dépendant de la rétroaction, chaque type de rétroaction (301) étant utilisé pour indiquer au dispositif de réception (310) de fournir une rétroaction avec une taille réduite, et le type de rétroaction (301) comprend un type de rétroaction de sélection d'antenne, et/ou un type de rétroaction de pré-codeur à large bande, et/ou une combinaison de type de rétroaction de pré-codeur à large bande et de pré-codeur à bande étroite ;
la détermination de données de rétroaction (304) sur la base du format (303) d'indication de rétroaction ; et
la fourniture des données de rétroaction (304) au dispositif de transmission (300) ;
dans lequel, si le type de rétroaction (301) est le type de rétroaction de sélection d'antenne,
un premier champ du champ (302) dépendant de la rétroaction indique un nombre d'antennes à sélectionner par le dispositif de réception (310) dans un ensemble d'antennes du dispositif de transmission (300) ; et
un deuxième champ du champ (302) dépendant de la rétroaction comprend un ensemble de facteurs, chaque facteur indiquant un nombre de tonalités pour un sous-ensemble différent d'antennes dans l'ensemble d'antennes ;
dans lequel, si le type de rétroaction est le format de rétroaction de pré-codeur à large bande,
un premier champ du champ (302) dépendant de la rétroaction indique un nombre maximal autorisé de tonalités pour chaque calcul d'une pluralité de calculs de pré-codeur à large bande déterminés ; et
un deuxième champ du champ (302) dépendant de la rétroaction indique qu'une donnée de pré-codeur par tonalité n'est pas requise ;
dans lequel, si le type de rétroaction est une combinaison de type de rétroaction de pré-codeur à large bande et de pré-codeur à bande étroite,
un premier champ du champ (302) dépendant de la rétroaction indique un nombre maximal autorisé de tonalités pour chaque calcul d'une pluralité de calculs de pré-codeur à large bande déterminés ; et
un deuxième champ du champ (302) dépendant de la rétroaction indique qu'une donnée de pré-codeur par tonalité est requise.

8. Dispositif de réception (310) selon la revendication 7, configuré pour :
   la fourniture d'une indication sur le type de rétroaction pris en charge dans le dispositif de réception (310), au dispositif de transmission (300).

9. Dispositif de réception (310) selon la revendication 7, dans lequel, si le type de rétroaction (301) est le type de rétroaction de sélection d'antenne, le dispositif de réception (310) est en outre configuré pour :

   la sélection d'un sous-ensemble d'antennes sur la base du nombre d'antennes indiqué par le premier champ du champ dépendant de la rétroaction, et la sélection du facteur parmi l'ensemble de facteurs indiqué par le deuxième champ du champ (302) dépendant de la rétroaction associé au sous-ensemble de détermination ;
   le calcul d'un vecteur de pré-codage sur la base du facteur sélectionné et du sous-ensemble d'antennes ;
   la fourniture d'une indication concernant le facteur sélectionné au dispositif de transmission (300) ; et
   la fourniture d'un bitmap indiquant le sous-ensemble sélectionné d'antennes au dispositif de transmission (300) .

10. Dispositif de réception (310) selon la revendication 7, dans lequel, si le type de rétroaction est le format de rétroaction de pré-codeur à large bande, le dispositif de réception (310) est en outre configuré pour :

    la détermination d'un calcul de pré-codeur à large bande ;
    la sélection d'un nombre de tonalités autorisées pour le calcul de pré-codeur à large bande déterminé ;
    la fourniture d'une indication sur le nombre de tonalités sélectionnées pour le calcul de pré-codeur à large bande, au dispositif de transmission (300) ; et
    la fourniture de données de pré-codeur du calcul de pré-codeur à large bande au dispositif de transmission (300) .

11. Dispositif de réception (310) selon la revendication 10, configuré pour :

    la sélection d'un premier nombre de bits utilisés pour transmettre les données de pré-codeur, le premier nombre étant sélectionné parmi un ensemble de nombres prédéfinis ; et
    l'indication au dispositif émetteur (300) du premier nombre sélectionné.

12. Dispositif de réception (310) selon la revendication 7, dans lequel, si le type de rétroaction est une combinaison de type de rétroaction de pré-codeur à large bande et de pré-codeur à bande étroite, le dispositif de réception (310) est en outre configuré pour :

    la détermination d'un calcul de pré-codeur à large bande ;
    la sélection d'un nombre de tonalités autorisées pour le calcul de pré-codeur à large bande déterminé ;
    le calcul de données de pré-codeur par tonalité sur la base du calcul de pré-codeur à large bande déterminé ;
    la fourniture d'une indication sur le nombre de tonalités sélectionnées pour le calcul de pré-codeur à large bande au dispositif de transmission (300) ;
    la fourniture de données de pré-codeur du calcul de pré-codeur à large bande au dispositif de transmission (300) ; et
    la fourniture des données de pré-codeur par tonalité calculées au dispositif de transmission (300).

13. Dispositif de réception (310) selon la revendication 12, configuré pour :

    la sélection d'un deuxième nombre de bits utilisés pour transmettre les données de pré-codeur, le deuxième nombre étant sélectionné parmi un ensemble de nombres prédéfinis ; et
    l'indication au dispositif de transmission (300) du deuxième nombre sélectionné.

14. Dispositif de réception (310) selon la revendication 12 ou 13, configuré pour :

    le calcul du pré-codeur à large bande sur la base d'une matrice de canal définie par un nombre d'antennes parmi des antennes dans le dispositif de transmission, et
    le calcul des données de pré-codeur par tonalité sur la base d'une sous-matrice de la matrice de canal, la sous-matrice étant définie par un nombre reçu du dispositif de transmission (300), le nombre reçu étant égal ou inférieur au nombre d'antennes.

| Size of $V$ ($Nr \times Nc$) | Number of angles ($Na$) | The order of angles in the Compressed Beamforming Feedback Matrix subfield |
|---|---|---|
| 2×1 | 2 | $\phi_{11}, \psi_{21}$ |
| 2×2 | 2 | $\phi_{11}, \psi_{21}$ |
| 3×1 | 4 | $\phi_{11}, \phi_{21}, \psi_{21}, \psi_{31}$ |
| 3×2 | 6 | $\phi_{11}, \phi_{21}, \psi_{21}, \psi_{31}, \phi_{22}, \psi_{32}$ |
| 3×3 | 6 | $\phi_{11}, \phi_{21}, \psi_{21}, \psi_{31}, \phi_{22}, \psi_{32}$ |
| 4×1 | 6 | $\phi_{11}, \phi_{21}, \phi_{31}, \psi_{21}, \psi_{31}, \psi_{41}$ |
| 4×2 | 10 | $\phi_{11}, \phi_{21}, \phi_{31}, \psi_{21}, \psi_{31}, \psi_{41}, \phi_{22}, \phi_{32}, \psi_{32}, \psi_{42}$ |
| 4×3 | 12 | $\phi_{11}, \phi_{21}, \phi_{31}, \psi_{21}, \psi_{31}, \psi_{41}, \phi_{22}, \phi_{32}, \psi_{32}, \psi_{42}, \phi_{33}, \psi_{43}$ |
| 4×4 | 12 | $\phi_{11}, \phi_{21}, \phi_{31}, \psi_{21}, \psi_{31}, \psi_{41}, \phi_{22}, \phi_{32}, \psi_{32}, \psi_{42}, \phi_{33}, \psi_{43}$ |

⋮

| 8×6 | 54 | $\phi_{11}, \phi_{21}, \phi_{31}, \phi_{41}, \phi_{51}, \phi_{61}, \phi_{71}, \psi_{21}, \psi_{31}, \psi_{41}, \psi_{51}, \psi_{61}, \psi_{71}, \psi_{81}, \phi_{22}, \phi_{32}, \phi_{42}, \phi_{52}, \phi_{62}, \phi_{72}, \psi_{32}, \psi_{42}, \psi_{52}, \psi_{62}, \psi_{72}, \psi_{82}, \phi_{33}, \phi_{43}, \phi_{53}, \phi_{63}, \phi_{73}, \psi_{43}, \psi_{53}, \psi_{63}, \psi_{73}, \psi_{83}, \phi_{44}, \phi_{54}, \phi_{64}, \phi_{74}, \psi_{54}, \psi_{64}, \psi_{74}, \psi_{84}, \phi_{55}, \phi_{65}, \phi_{75}, \psi_{65}, \psi_{75}, \psi_{85}, \phi_{66}, \phi_{76}, \psi_{76}, \psi_{86}$ |
| 8×7 | 56 | $\phi_{11}, \phi_{21}, \phi_{31}, \phi_{41}, \phi_{51}, \phi_{61}, \phi_{71}, \psi_{21}, \psi_{31}, \psi_{41}, \psi_{51}, \psi_{61}, \psi_{71}, \psi_{81}, \phi_{22}, \phi_{32}, \phi_{42}, \phi_{52}, \phi_{62}, \phi_{72}, \psi_{32}, \psi_{42}, \psi_{52}, \psi_{62}, \psi_{72}, \psi_{82}, \phi_{33}, \phi_{43}, \phi_{53}, \phi_{63}, \phi_{73}, \psi_{43}, \psi_{53}, \psi_{63}, \psi_{73}, \psi_{83}, \phi_{44}, \phi_{54}, \phi_{64}, \phi_{74}, \psi_{54}, \psi_{64}, \psi_{74}, \psi_{84}, \phi_{55}, \phi_{65}, \phi_{75}, \psi_{65}, \psi_{75}, \psi_{85}, \phi_{66}, \phi_{76}, \psi_{76}, \psi_{86}, \phi_{77}, \psi_{87}$ |
| 8×8 | 56 | $\phi_{11}, \phi_{21}, \phi_{31}, \phi_{41}, \phi_{51}, \phi_{61}, \phi_{71}, \psi_{21}, \psi_{31}, \psi_{41}, \psi_{51}, \psi_{61}, \psi_{71}, \psi_{81}, \phi_{22}, \phi_{32}, \phi_{42}, \phi_{52}, \phi_{62}, \phi_{72}, \psi_{32}, \psi_{42}, \psi_{52}, \psi_{62}, \psi_{72}, \psi_{82}, \phi_{33}, \phi_{43}, \phi_{53}, \phi_{63}, \phi_{73}, \psi_{43}, \psi_{53}, \psi_{63}, \psi_{73}, \psi_{83}, \phi_{44}, \phi_{54}, \phi_{64}, \phi_{74}, \psi_{54}, \psi_{64}, \psi_{74}, \psi_{84}, \phi_{55}, \phi_{65}, \phi_{75}, \psi_{65}, \psi_{75}, \psi_{85}, \phi_{66}, \phi_{76}, \psi_{76}, \psi_{86}, \phi_{77}, \psi_{87}$ |

**FIG. 1**

**FIG. 2**

FIG. 3

| NDPA | | NDP | | TF | | Feedback Packet |

| Reduced Feedback Enable | Reduced Feedback Type | Feedback Dependent Field |
|---|---|---|
| b0 | b0 | b0,...,bk |

Time

**FIG. 4**

Single Indication Field

| Number of tones |
|---|
| b0,b1,...,bN |

New Field

Per Tone Data

| Original Size of V (Nr x Nc) | Size of V for Ant Selection (Nr_sel x Nc) | Number Of Angles | The order of angles in Compressed Beamforming Feedback Matrix Subfield | Antenna Selection BitMap |
|---|---|---|---|---|
| 16x2 | NxM | 26 | $\phi11, \phi21, \phi31, \phi41, \phi51, \phi61, \phi71, \psi21, \psi31, \psi41, \psi51, \psi61, \psi71, \psi81, \phi22, \phi32,$ $\phi42, \phi52, \phi62, \phi72, \psi32, \psi42, \psi52, \psi62, \psi72, \psi82$ | b0,b1,b2...,b15 |

New Field

**FIG. 5**

New Field for Entire Transmission

| Number of tones |
| --- |
| b0,b1,...,bN |

Wideband Precoder Data

| Size of V (Nr x Nc) | Number Of Angles | The order of angles in Compressed Beamforming Feedback Matrix Subfield |
| --- | --- | --- |
| 8x2 | 26 | $\phi 11, \phi 21, \phi 31, \phi 41, \phi 51, \phi 61, \phi 71, \psi 21, \psi 31, \psi 41, \psi 51, \psi 61, \psi 71, \psi 81, \phi 22, \phi 32,$ $\phi 42, \phi 52, \phi 62, \phi 72, \psi 32, \psi 42, \psi 52, \psi 62, \psi 72, \psi 82$ |

**FIG. 6**

Per-tone Precoder

| Size of V<br>(Nr x Nc) | Number Of<br>Angles | The order of angles in Compressed  Beamforming Feedback Matrix Subfield |
|---|---|---|
| 2x2 | 28 | $\phi 11, \phi 21.$ |

**FIG. 7**

EP 3 903 426 B1

FIG. 8

901 — Select at least one of a plurality of feedback types.

902 — Determine, and send to the receiving device, a feedback indication format, wherein the feedback indication format comprises the selected at least one feedback type and a feedback dependent field based on the selected feedback type.

903 — Obtain feedback data from the receiving device, wherein the feedback data bases on the determined feedback indication format sent to the receiving device.

**FIG. 9**

<u>1000</u>

| 1001 | Receive a feedback indication format from the transmitting device, wherein the feedback indication format comprises at least one feedback type and a feedback dependent field. |

| 1002 | Determine feedback data based on the feedback indication format. |

| 1003 | Transmit the feedback data to the transmitting device. |

**FIG. 10**

**FIG. 11**

EP 3 903 426 B1

**200 frames, 8000 bits per frame**

FIG. 12

EP 3 903 426 B1

**REFERENCES CITED IN THE DESCRIPTION**

**Patent documents cited in the description**

- US 2017111924 A1

- KR 20160031443 A1